# EUROPÄISCHE PATENTSCHRIFT

(11) **EP 1 497 791 B1**
(45) Veröffentlichungstag und Bekanntmachung des Hinweises auf die Patenterteilung: **01.09.2010**
(21) Anmeldenummer: 03747114.1
(22) Anmeldetag: 23.04.2003
(51) Int. Cl.: G06T 3/00, G06T 3/40

(54) **ERZEUGUNG EINES GESAMTBILDES DURCH ABTASTEN VON TEILBEREICHEN EINER VORLAGE SCANNEN**
PRODUCTION OF A COMPLETE IMAGE BY SCANNING PARTIAL AREAS OF A PATTERN
PRODUCTION D'UNE IMAGE D'ENSEMBLE PAR BALAYAGE DE ZONES PARTIELLES D'UN MODELE

(30) Priorität: 23.04.2002 EP 02009056
(43) Veröffentlichungstag der Anmeldung: 19.01.2005
(73) Patentinhaber: Palm, Inc., Sunnyvale, CA 94085-2801 (US)
(72) Erfinder: SIMON, Markus, 91054 Buckenhof (DE)
(74) Vertreter: Samson & Partner
(86) Internationale Anmeldenummer: PCT/EP2003/004228
(87) Internationale Veröffentlichungsnummer: WO 2003/091948

(56) Entgegenhaltungen:
- EP-A- 1 096 777
- US-A- 5 581 637
- US-A1- 2001 010 546

## Beschreibung

Die Erfindung betrifft ein Verfahren gemäß dem Oberbegriff des Patentanspruchs 1.

Ein solches Verfahren kann beispielsweise zur Gewinnung eines Panoramabildes oder auch zum Abtasten von Dokumenten eingesetzt werden.

Der durch Kamera und Objektiv vorgegebene Raumwinkel, der durch ein Bild abgetastet beziehungsweise aufgenommen wird, reicht in vielen Situationen nicht aus, um Objekte aus der Umgebung vollständig zu erfassen. Die Verwendung besonders weitwinkliger Objektive zur vollständigen Aufnahme der Objekte ist nicht immer möglich und auch nicht immer gewünscht. Ein sehr weitwinkliges Objektiv verursacht durch die Eigenschaften der Linse extreme Verzerrungen in den Bildrandbereichen, die den Eindruck in einem erheblichen Maße stören. Auβerdem wird die Qualität der Objektdarstellung durch die limitierte Sensorauflösung gestört. In vielen Fällen ist aber auch das Austauschen der Linse / des Objektives nicht möglich, weil diese Komponente fest mit der Kamera integriert ist.

Es sind bereits eine Vielzahl von Verfahren realisiert worden, die sich mit einer ähnlichen Themenstellung befasst haben. Der Schwerpunkt der Betrachtung lag hierbei häufig in der Generierung von Panoramabildern. Die bekannten Verfahren zur Generierung von Bildern eines größeren Gesichtsfeldes erfordern zur Korrektur der Sensorfehler aber sehr aufwendige und komplexe Rechenoperationen zur Korrektur der Linsen- und Abbildungsfehler, die sich nicht in Videoechtzeit realisieren lassen. Eine Berechnung eines Bildes mit einem erweiterten Gesichtsfeld kann aus diesem Grund in der Regel nur offline durchgeführt werden.

Die zur Generierung des Ergebnisbildes verwendeten Bilder benötigen bei diesen Verfahren nur einen geringen Überlapp. Zwei zueinander benachbarte Bilder beziehungsweise zwei aufeinanderfolgende Bilder enthalten in diesem Fall nur wenig gemeinsame Bildinformation. In Abhängigkeit der Umgebung besitzen die Bilder integral somit aber ganz unterschiedliche Beleuchtungsverhältnisse. Durch eine Blendenregelung der Kamera führt dies jedoch zu extrem unterschiedlichen Ausleuchtungen an den zusammengefügten Bildkanten, die ebenfalls nur unter sehr hohem Aufwand wieder harmonisiert werden können.

Faxgeräte und Flachbettscanner ermöglichen die elektronische Übermittlung von Dokumenten die in Papierform vorliegen. In vielen Situationen ist die Verfügbarkeit dieser Geräte, wie zum Beispiel während einer Besprechung, nicht immer gewährleistet. Eine Alternative zur Verwendung eines Faxgerätes oder eines Flachbrettscanners ist eine digitale Kamera, mit der sich die Bildinformation ebenfalls in digitaler Form abspeichern lässt. Die Auflösung handelsüblicher Kameras reicht jedoch noch nicht aus, um eine ausreichende Auflösung des Dokuments mit einer Einzelaufnahme zu erzeugen.

Das Scannen von Dokumenten durch eine Vielzahl von Einzelbildern bei geringem Abstand zum Dokument zur Steigerung der Auflösung ist ein bekannter Ansatz. Es gibt bisher nur wenige und zum Teil sehr instabile Verfahren, die dazu verwendet werden können, um aus den aufgezeichneten Einzelbildern wieder ein zweidimensionales Gesamtbild zusammenzusetzen.

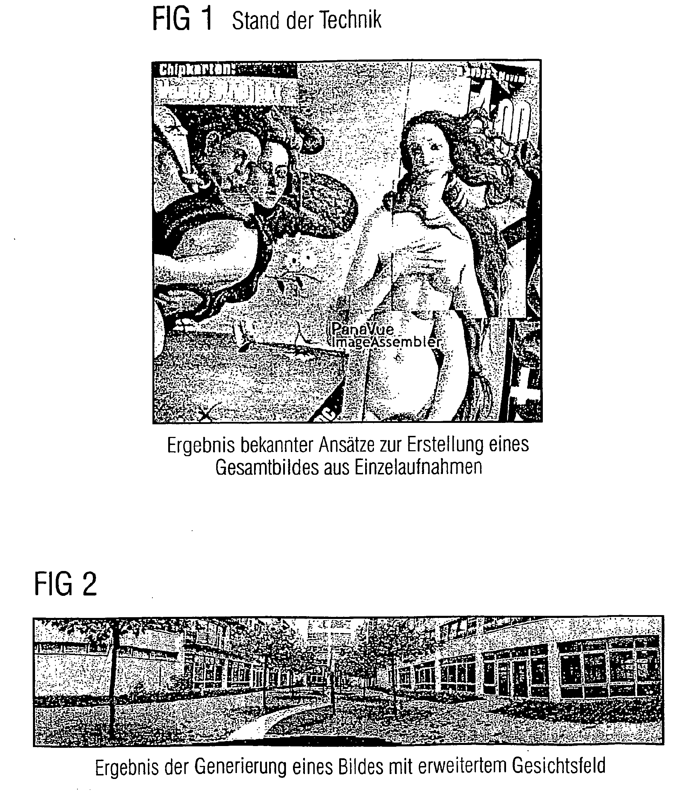

Die meisten Verfahren basieren darauf, dass die Bildinformation in einem ersten Verarbeitungsschritt durch sehr komplexe Rechenoperationen zunächst entzerrt werden. In einem darauffolgenden Verarbeitungsschritt wird dann die angrenzende Bildinformation zu benachbarten Bildern in alle vier Bildkantenrichtungen harmonisiert. Die Bilder benötigen hierzu nur einen geringen Überlapp. Jedes Bild wird sowohl horizontal als auch vertikal zu benachbarten Bildern korrigiert. Neben der kaum zu tolerierenden hohen Rechenzeit führen diese Verfahren häufig zu rautenförmigen Verzerrung der Bildinformation, die für den Betrachter sehr störend sind (siehe Figur 1). Die Verfahren sind aufgrund ihrer Komplexität häufig nur interaktiv und offline durchzuführen.

US 2001/0010546 A1 offenbart das Zusammenfügen von Bildern basierend auf einer räumlichen Beziehung zwischen den Bildern. Zur Ermittlung der räumlichen Beziehungen zwischen den Bildern wird der Einsatz von Korrelationsverfahren vorgeschlagen.

EP 1 096 777 A bezieht sich ebenfalls auf ein Verfahren zur Erzeugung eines Gesamtbildes aus Einzelbildern. Eine Kamera nimmt die Einzelbilder auf, die dann zu einem Gesamtbild zusammengefügt werden.

US 5 581 637 A betrifft ein weiteres Verfahren zum Zusammensetzen von Einzelbildern zu einem Gesamtbild. Die Einzelbilder können sich dabei überlappen.

Der Erfindung liegt die Aufgabe zugrunde ein Verfahren der eingangs genannte Art anzugeben, das ohne hohe Rechenleistung eine gute Qualität des Ergebnisbildes liefert.

Diese Aufgabe wird erfindungsgemäß durch die im Patentanspruch 1 angegebenen Merkmale gelöst.

Das erfindungsgemäß Verfahren weist folgende Vorteile auf:
- Schnelligkeit der Verarbeitung
- Eine rechenintensive Korrektur der Linsen- beziehungsweise Abbildungsfehler im Bild ist nicht erforderlich
- Harmonisierung der Beleuchtungssituation an zusammengefügten Kanten ist durch quasi kontinuierliche Bildabtastung nicht erforderlich
- Steuerung der additiv hinzukommenden Bildinformation in Abhängigkeit des Bildversatzes.

Im folgenden Wird die Erfindung anhand eines in der Zeichnung dargestellten Ausführungsbeispieles näher beschrieben. Dabei zeigen:
- Figur 1: ein aus Einzelaufnahmen erstelltes Gesamtbild gemäß dem Stand der Technik,
- Figur 2: ein durch Scannen der Umgebung erzeugtes Ergebnis- bild,
- Figur 3: eine Scanbewegung zur Abtastung eines Dokumentes,
- Figur 4: die Bildaufnahme bei der Abtastbewegung nach Figur 2,
- Figur 5: das Ergebnis aufeinanderfolgender eindimensionaler Scans, und
- Figur 6: das Ergebnisbild nach dem erfindungsgemäß Verfahren.

Das erfindungsgemäß Verfahren geht von der Erzeugung von Einzelbildern aus, die bei einer ein- oder bei einer zweidimensionalen Scan- oder Abtastbewegung generiert werden

Erfindungsgemäß werden Einzelbilder generiert, die zueinander einen hohen Überlappungsgrad aufweisen. Hierdurch wird ein Gesamtbild erzeugt, das nahezu keine Verzerrungen aufweist und einen sehr großen Raumwinkel abdeckt. Das Verfahren ermöglicht es beispielsweise Panoramabilder zu erzeugen oder auch Dokumente mit einer hohen Auflösung einzuscannen.

Der Bildsensor arbeitet dabei beispielsweise mit voller Abtastfrequenz, so dass benachbarte Bilder durch einen langsamen Schwenk über das zu erfassende Objekt nur einen geringen Versatz zueinander aufweisen. Von jedem Bild wird ein Teil der unverzerrten Bildinformation aus der Bildmitte in ein Ergebnisbild kopiert. Die Größe des kopierten Bildausschnittes wird in Abhängigkeit des errechneten Versatzes zu dem vorhergehenden Bild gesteuert. Da zwei benachbarte Bilder einen sehr hohen Überlapp aufweisen, besitzen die Bilder nahezu identische Beleuchtungsverhältnisse, so dass beim Zusammenfügen benachbarter Bildkanten in der Regel keine Harmonisierung der Ausleuchtung erforderlich ist.

Zu Durchführung des erfindungsgemäßen Verfahrens wird beispielsweise ein Handy benutzt, das folgende Komponenten aufweist:
- Kameramodul auf der Rückseite des Handys zur Aufzeichnung von Bilder aus der Umgebung
- Prozessor zur Verarbeitung der Bilddaten und zur Generierung des Ergebnisbildes,(Bewegungsschätzung, Bildkomposition, usw.)
- Display zur Bildanzeige

Die Funktion zur Generierung des Ergebnisbildes (siehe auch Figur 2) auf der Basis einer Bildsequenz umfasst im wesentlichen folgende Verarbeitungsschritte:
- Bewegungsschätzung zweier benachbarter Bilder
- Aufbau des Ergebnisbildes

In den folgenden Abschnitten werden die Verfahren in den einzelnen Verarbeitungsschritten unter der Vereinfachung näher erläutert, dass der Scan der Umgebung eindimensional von rechts nach links erfolgt:

### 1) Bewegungsschätzung zweier benachbarter Bilder

Die Bewegung von zwei benachbarten Bildern wird beispielsweise nach dem MSE (Mean Squared Error) Verfahren bestimmt. Bei diesem Verfahren wird für ein Bildbereich des Ausgangsbildes der best möglichste Match in einer lokalen Nachbarschaft zu dem vorherigen Bild gesucht. Durch den besten Match ist der Verschiebungsvektor der beiden Bilder relativ zueinander gegeben.

### 2) Aktualisierung des Ergebnisbildes

Auf der Basis des Verschiebungsvektors wird die Position innerhalb des Ergebnisbildes ermittelt, an die die hinzukommende Bildinformation kopiert wird. Die Breite des hinzukommenden Bildausschnittes des Ausgangsbildes ist durch den Versatz der Bilder in Scanrichtung (x Richtung) gegeben. In der Weise entsteht keine Lücke zwischen dem schon aufgebauten und dem hinzugefügten Bildausschnitt. Senkrecht zur Scanrichtung (y Richtung) wird die volle Bildinformation berücksichtigt. Das Ergebnis der Verarbeitung vieler Bilder nach diesem Verfahren ist in Figur 1 zu sehen.

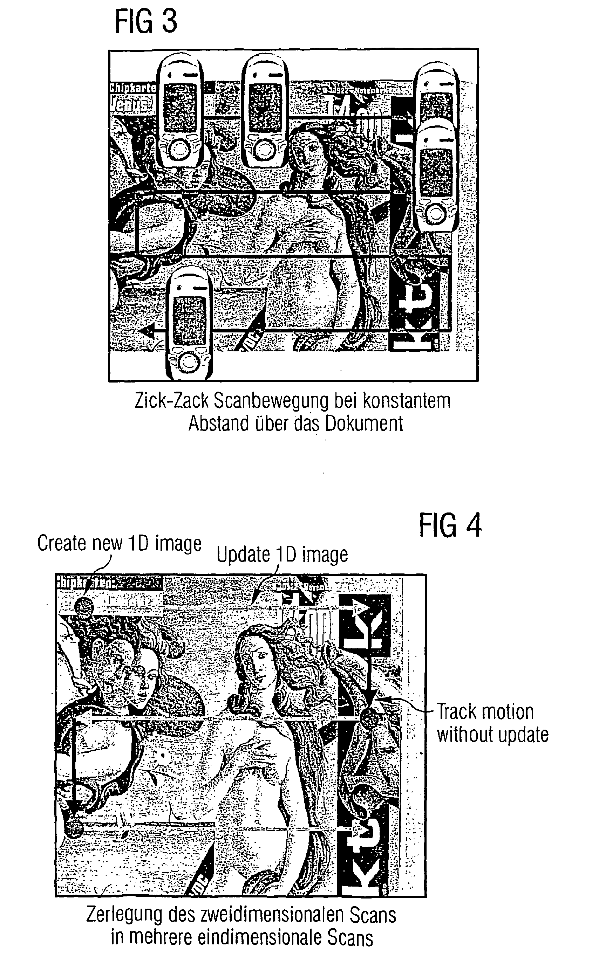

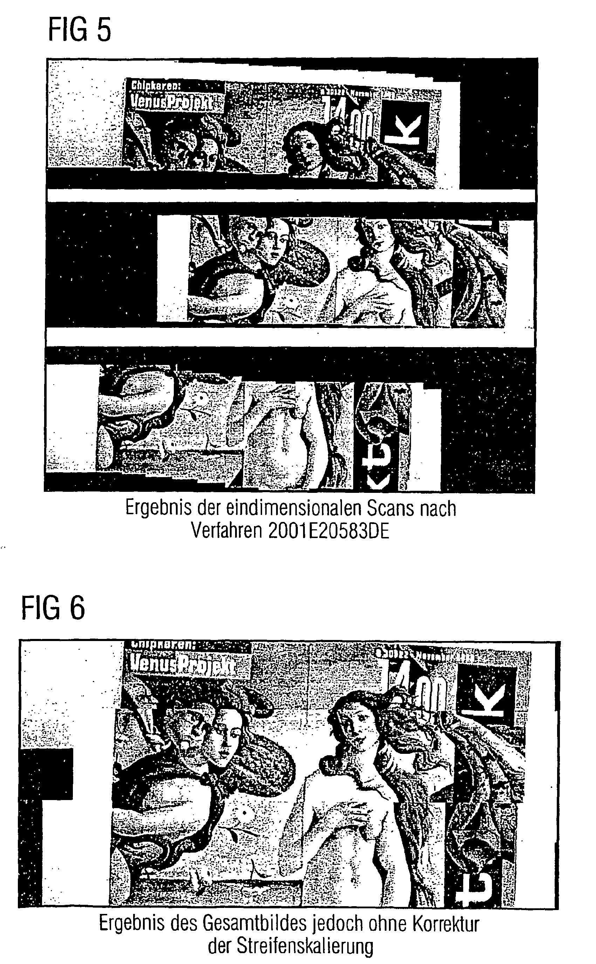

Bei einer Weiterbildung des erfindungsgemäß Verfahrens erfolgt das Scannen des Dokumentes durch eine Zick-Zack Bewegung der Kamera über das Dokument in einem konstanten Abstand (siehe Figur 3). Um Variationen des Abstands zum Dokument und damit Größenänderungen in den Bildern während des Scanvorgangs zu vermeiden, wird die Kamera beispielsweise auf einem Gestell über das Dokument geführt, bei dem die Kamera senkrecht nach unten ausgerichtet ist. Durch eine Bewegungsanalyse aufeinanderfolgender Bilder wird der zweidimensionale Scan in mehrere eindimensionale (horizontale) Scans zerlegt (siehe Figuren 4 und 5). Jeder eindimensionale Scan zeigt einen horizontalen, unverzerrten Streifen des Originaldokuments. Durch die Zerlegung des zweidimensionalen Scans in mehrere eindimensionale Scans reduziert sich das Problem der Dokumentengenerierung auf das horizontale Skalieren der Bildstreifen und das Zusammenfügen der Horizontalstreifen in vertikaler Richtung (siehe Figur 5). Durch das lineare Skalieren der gesamten Bildinformation werden rautenförmige Verzerrungen im Gesamtbild vermieden, wie sie bei herkömmlichen Verfahren auftreten (siehe Figur 6).

## Patentansprüche

1. Verfahren zur Gewinnung eines Ergebnisbildes, umfassend den Schritt:
- Erzeugung einer Mehrzahl von Einzelbildern, die nacheinander bei einer zweidimensionalen Scanbewegung erzeugt werden, wobei die aufeinanderfolgenden Einzelbilder gegeneinander jeweils einen geringen Versatz aufweisen,
**dadurch gekennzeichnet, dass** das Verfahren des Weiteren die folgenden Schritte umfasst:
- Erzeugung mehrerer eindimensionaler Scans aus der bei der zweidimensionalen Scanbewegung erzeugten Mehrzahl von Einzelbildern; und
- Zusammenfügen der eindimensionalen Scans.

2. Verfahren nach Anspruch 1, bei dem aus der zweidimensionalen Scanbewegung erzeugten Mehrzahl von Einzelbildern horizontale eindimensionale Scans erzeugt werden.

3. Verfahren nach Anspruch 1 oder 2, bei dem jeder eindimensionale Scan einen horizontalen, unverzerrten Bildstreifen eines Originaldokuments aufweist.

4. Verfahren nach einem der vorherigen Ansprüche, bei dem zur Erzeugung der eindimensionalen Scans durch eine Bewegungsanalyse von bei der zweidimensionalen Scanbewegung erzeugten, aufeinanderfolgenden Einzelbildern der zweidimensionale Scan in mehrere eindimensionale Scans zerlegt wird.

5. Verfahren nach einem der vorherigen Ansprüche, bei dem zur Erzeugung des Ergebnisbildes nur in Richtung der eindimensionalen Scans skaliert wird.

6. Verfahren nach Anspruch 5 und 3, bei dem nur die horizontalen Bildstreifen skaliert und in vertikaler Richtung zusammengefügt werden.

## Claims

1. A method of obtaining a result image comprising the step:
- generating a plurality of individual images which are successively generated during a two-dimensional scanning movement,
wherein the successive individual images are slightly offset in relation to each other,
**characterized in that** the method further comprises the following steps:
- generating several one-dimensional scans from the plurality of individual images generated during the two-dimensional scanning movement; and
- stitching together the one-dimensional scans.

2. The method according to claim 1, wherein horizontal one-dimensional scans are generated from the plurality of individual images generated during the two-dimensional scanning movement.

3. The method according to claim 1 or 2, wherein each of the one-dimensional scans has a horizontal, undistorted image strip of an original document.

4. The method according to any of the preceding claims, wherein for generating the one-dimensional scans, the two-dimensional scan is decomposed into several one-dimensional scans by a movement analysis of successive individual images generated during the two-dimensional scanning movement.

5. The method according to any of the preceding claims, wherein for generating the result image, scaling is only executed in the direction of the one-dimensional scans.

6. The Method according to claims 5 and 3, wherein only the horizontal image strips are scaled and stitched together in vertical direction.

## Revendications

1. Procédé de l'obtention d'une image de résultat, le procédé comprenant l'étape de:
- générer une pluralité d'images individuelles générées successivement lors d'un mouvement de scan bidimensionnel, les images individuelles successives comportant respectivement un déport faible l'une à l'autre,
**caractérisé en ce que** le procédé comprenant en outre les étapes suivantes:
- générer plusieurs scans unidimensionnels à partir de la pluralité d'images individuelles générées lors du mouvement de scan bidimensionnel; et
- assembler les scans unidimensionnels.

2. Procédé selon la revendication 1, les scans unidimensionnels étant générés à partir de la pluralité d'images individuelles générées lors du mouvement de scan bidimensionnel.

3. Procédé selon la revendication 1 ou 2, chacun des scans unidimensionnels comportant une bande d'image horizontale non-déformée d'un document original.

4. Procédé selon l'une des revendications précédentes, pour la génération des scans unidimensionnels, le scan bidimensionnel étant décomposé dans plusieurs scans unidimensionnels par une analyse du mouvement d'images individuelles successives générées lors du mouvement de scan bidimensionnel.

5. Procédé selon l'une des revendications précédentes, pour la génération de l'image de résultat, une mise à l'échelle étant seulement exécutée dans la direction des scans unidimensionnels.

6. Procédé selon la revendication 5 et 3, seulement les bandes d'images horizontales étant mises à l'échelle et étant assemblées dans la direction verticale.
